# EUROPÄISCHE PATENTANMELDUNG

(11) **EP 2 343 569 A1**
(43) Veröffentlichungstag der Anmeldung: **13.07.2011**
(21) Anmeldenummer: 10014826.1
(22) Anmeldetag: 22.11.2010
(51) Int. Cl.: G01S 7/00, G01S 13/04, G01S 13/56, G01S 13/87, E05F 15/20

(54) **Steuerungssystem für einen Türflügel**

(30) Priorität: 12.01.2010 DE 102010004490
(71) Anmelder: Bircher Reglomat AG, 8222 Beringen (CH)
(72) Erfinder: Elchinger, Thomas, 8472 Seuzach (CH)
(74) Vertreter: Arat, Dogan

(57) **Zusammenfassung**

Bei einem Verfahren zur Überwachung und Ansteuerung einer Flügeltür mit Radarsensoren, wobei die Radarsensoren Signale aussenden und Antwortsignale empfangen, sollen die Antwortsignale in einen zentralen Rechner übermittelt werden, die eingehenden Antwortsignale (5.1, 6.1, 7.1) der Sensoren (2, 3, 4) im Rechner (9) ausgewertet werden und durch den Rechner (9) wird die Flügeltür (1) angesteuert.

## Beschreibung

### Technisches Gebiet

Die vorliegende Erfindung betrifft ein Verfahren nach dem Oberbegriff des Anspruch 1 sowie eine Vorrichtung nach dem Oberbegriff des nebengeordneten Anspruch 5.

### Stand der Technik

Aus dem Stand der Technik sind vielfältige Steuerungssysteme zur Überwachung und Ansteuerung von Türflügeln bekannt. So ist beispielsweise aus der DE 10 2008 008 149 A1 eine Vorrichtung zur Ansteuerung und/oder Überwachung zumindest eines verfahrbaren Flügels, insbesondere einer Tür, eines Fensters od. dgl. mit folgenden Merkmalen bekannt:
- Es sind zumindest zwei Sensoreinrichtungen vorgesehen;
- Jedem dieser zumindest beiden Sensoreinrichtungen ist ein Sensorfeld zugeordnet, in welchem ein bewegtes Objekt mittels der Sensoreinrichtung detektierbar ist;
- Es ist ferner einer Auswerte- und/oder Steuerungseinrichtung und/oder eine Signal-Verarbeitungseinheit zur Ansteuerung und/oder Überwachung des zumindest einen überwachten Flügels vorgesehen, wobei die Besonderheit hierbei darin zu sehen ist, dass folgende Merkmale vorhanden sind:
- Die zumindest beiden Sensorfelder sind bzgl. ihrer Grösse, Lage und/oder Form unterschiedlich gestaltet, so dass das erste Sensorfeld in Parallelrichtung zu dem zumindest einen überwachten Flügel und/oder überwachten Durchgang breiter ist als das zweite Sensorfeld, welches gegenüber dem ersten Sensorfeld schmäler ist;
- Die Auswerte- und/oder Steuerungseinrichtung und/oder die Signal-Verarbeitungseinheit ist so aufgebaut, dass die Ansteuerung und/oder Überwachung des zumindest einen überwachten Flügels unterschiedlich in Abhängigkeit der Öffnungsweite der zumindest einen Flügel umfassenden Flügelanordnung erfolgt, und zwar insbesondere in Abhängigkeit einer ersten oder maximalen Öffnungsweite der Flügelanordnung oder in Abhängigkeit einer in einem bestimmten Betriebsmodus vorgebbaren und gegenüber der ersten Öffnungsweite abweichenden oder geringeren Öffnungsweite.

Aus dem Stand der Technik ist allgemein bekannt, dass bei automatischen Türanlagen der Bereich vor den Schiebetüren mittels Sensoren überwacht wird. Diese Sensoren weisen jeder für sich auf eine Aufnahmeeinheit und eine Auswerteeinheit auf.

Eine andere Bezeichnung für die eingesetzten Sensoren ist der Begriff des "Bewegungsmelders".

Die aus dem Stand der Technik bekannten Überwachungssysteme arbeiten mit dem sogenannten Doppelprinzip. Dabei wird ein Signal in einen Raum gesandt und die von einer Person oder einem Gegenstand zurückgeworfenen Signale durch einen Sensor erfasst und weiter verarbeitet. Durch das ständige Verfassen dieser Signale entscheidet die integrierte Auswerteeinheit darüber, ob ein Befehl zum Öffnen der Tür gegeben werden soll. In der Regel arbeiten derartige Bewegungsmelder auf Basis von Ultraschall, Infrarotstrahlung oder nach dem Radarprinzip.

Neben den sogenannten "Bewegungsmeldern" sind auch sogenannte "Zustandsmelder" aus dem Stand der Technik bekannt. Die Zustandsmelder arbeiten auf Passiv-Infrarotstrahlungsbasis. Durch Messung der im Überwachungs- und Auslösbereich durch die Sensoren und Detektoren abgegebene Strahlung kann in Abhängigkeit der sich verändernden Intensität der Strahlung eine entsprechende Auswertung und Ansteuerung der zu öffnenden und zu schliessenden Tür vorgenommen werden. Zuletzt wird der Vollständigkeit halber auch auf die sogenannten Präsenz-Detektoren hingewiesen, die ebenfalls aus dem Stand der Technik bekannt sind und mit Lichtschranken oder sogenannten CCD-Sensoren arbeiten. Im Stand der Technik arbeiten alle aufgeführten Arten von Meldern und Sensoren parallel nebeneinander her.

Sie nutzen unterschiedliche Mittel zur Überwachung von Räumen, Personen und Gegenständen. Jede dieser Sensoren und Melder weist einen eigenen Rechner auf, der je nach Obliegenheit und Ziel des betreffenden Sensors oder Melders einen Türflügel ansteuert oder überwacht.

Offenbarung der Erfindung

Aufgabe der Erfindung ist es, ein möglichst einheitliches Konzept zur Verfügung zu stellen, welches für Sensoren, Sensoreinrichtungen oder allgemein Überwachung- und Erfassungsmittel insbesondere zur Steuerung und Überwachung von Flügeltüren zur Verfügung steht. Dabei soll dieses System nur auf Radarbasis funktionieren und die Auswertung der einzelnen Sender sollen möglichst kostensparend, effektiv und einfach durchgeführt werden. Ausserdem soll eine benutzerfreundliche und einfach zu handhabende Aufteilung sowie Anwendung erreicht werden, wobei die Nachteile des Standes der Technik behoben oder zumindest gemildert werden sollen. Insbesondere soll die Vorrichtung einfach aufgebaut und günstig zu betreiben sein, wobei eine hohe Verbesserung der flexiblen Anwendbarkeit angestrebt wird.

Die Aufgabe wird bezüglich des Verfahrens entsprechend dem in Anspruch 1 und bezüglich der Vorrichtung entsprechend dem im Anspruch 5 angegebenen Merkmalen gelöst. Vorteilhafte Ausgestaltungen sind in den Unteransprüchen angegeben.

Durch den Einsatz verschiedenster Überwachungssysteme und Sensoren mit eigens integrierten Rechnereinheiten werden naturgemäss unterschiedliche Fehlerquellen geschaffen, wobei das Nebeneinanderarbeiten verschiedener Systeme und Rechner die Fehlerquellen nochmals potentieren. In diesem Zusammenhang soll das vorliegende Verfahren sicher stellen, dass die Fehlerquellen durch Einsatz eines einzigen Rechners, welche Signale verschiedenster aus dem Stand der Technik bekannten Sensoren kombiniert und die entsprechenden Signale auswertet und die Vorrichtung zum Öffnen und Verschliessen von Öffnungen entsprechend des Rechnerprozesses ansteuert.

Mit der erfindungsgemässen Vorrichtung zum Öffnen und Verschliessen von Öffnungen sollen alle Türen, Flügeltüren, Falttüren in einfacher oder doppelter Ausführung gemeint sein. Unter den Begriff der Vorrichtung zum Verschliessen von Öffnungen soll auch die seitlich verschiebbaren Flügeltüren gemeint sein, die im Ein- und Ausgangsbereich von Kaufhäusern oder anderen Gebäuden zum Einsatz kommen. Wenn im Rahmen der Patentanmeldung von einer Tür gesprochen wird, so soll darunter gerade die Vorrichtung zum Öffnen und Verschliessen von Öffnungen gemeint sein.

Erfindungsgemäss sollen unter den Begriff des Sensors, alle aus dem Stand der Technik bekannten Sensoren fallen. Bevorzugt soll es sich dabei um Radarsensoren handeln. In einem anderen bevorzugten Ausführungsbeispiel sollen darunter CCD-Sensoren fallen. In einem wieder bevorzugten anderen Ausführungsbeispiel sollen darunter Infrarotsensoren oder Ultraschallsensoren fallen. Auch eine Kombination einzelner oder aller genannter bevorzugter Sensoren soll unter den Begriff des Sensors fallen.

Für die Durchführung des erfindungsgemässen Verfahrens bedarf es zumindest zweier Sensoren sowie einem Rechner. Vorteilhaft hierbei ist, dass bisher jeder Sensor einen eigenen Rechner hatte. Die Kosten für den im Sensor integrierten Rechner können nun eingespart werden.

Die Sensoren steuern nicht mehr die Tür an, sondern übermitteln lediglich die Antwortsignale, die sie aus dem Bereich um die Tür erhalten, an den Rechner. Der Rechner entscheidet aufgrund der vorgegebenen Parameter, ob die Tür geöffnet werden soll oder nicht.

Vorteilhaft an der Nutzung von Radarsensoren hat sich erwiesen, dass Radarsensoren besonders geeignet sind, um möglichst viele verschiedene Dinge zu kombinieren. So kann vorteilhafter Weise die im Stand der Technik durch verschiedene Arten von Sensoren erfolgte Überwachung nun nur mit Radarsensoren erfolgen. Die Gleichschaltung aller Überwachungsbereiche und Systeme verringert hierbei die Fehlerquellen und hat ausserdem den Vorteil einer einfacheren kostengünstigeren Wartung, Reparatur und Ausgestaltung.

Die erfindungsgemässe Vorrichtung weist mindestens zwei Sensoren auf, die eine Tür und den Bereich um die Tür überwachen. Die Übertragung der Antwortsignale der Sensoren in den Rechnern kann über Kabel oder Funk und analog oder digital erfolgen.

Der Rechner übernimmt dann die Entscheidung, ob die Tür geöffnet oder geschlossen werden soll. Dabei wendet er die vorher vorgegeben Parameter an. Vorteilhaft ist hierbei wiederum, dass nur ein Rechner eingesetzt werden muss, um mehr als einen Sensor zu bedienen.

Die Sensoren haben lediglich die Aufgabe von Spiegeln, die die Antwortsignale an den Rechner weitergeben. Der Rechner trifft die letztendliche Entscheidung. Eine vorab Entscheidung im Sensor, wie sie im Stand der Technik der Fall ist, beinhaltet zusätzliche Fehlerquellen. Daher ist die Ausgestaltung mit weniger Rechnern vorteilhaft. Die Anzahl der Sensoren soll nicht begrenzt sein.

In einem bevorzugten Ausführungsbeispiel werden in dem Rechner Parameter abgelegt. Diese Parameter sind auf die jeweiligen Arten von Sensoren abgestimmt. So bedürfen Radarsensoren beispielsweise anderen Parametern als Infrarotsensoren. Bei Eintreffen der einzelnen Parameter entscheidet der Rechner, ob die Tür geöffnet werden soll oder nicht. Vorteilhaft hierbei ist, dass durch das Hinterlegen bestimmter Parameter für bestimmte Sensorarten das Fehlöffnen oder Schliessen ausgeschlossen wird.

In einem anderen bevorzugten Ausführungsbeispiel werden diese Parameter parallel nebeneinander für verschiedene Arten von Sensoren betrieben. Dies hat beispielsweise den Vorteil, dass Sensoren je nach besonders geeignetem Einsatzgebiet ausgewählt und eingesetzt werden.

In einem bevorzugten Ausführungsbeispiel weisen die Sensoren keinerlei Rechner mehr aus. Der Rechner ist räumlich an einer nicht sichtbaren Stelle angebracht und die Sensoren werden dadurch sehr viel kleiner und unauffälliger. Dies gestattet einen besseren Einsatz in engen Bereichen und eine höhere gestalterische Freiheit für den Nutzer.

### Kurze Beschreibung der Zeichnungen

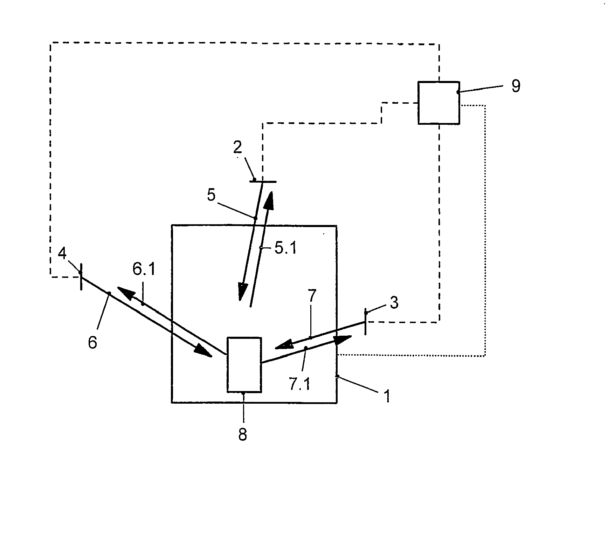

Die Erfindung wird anhand beiliegender Zeichnung eingehend erläutert, wobei die Zeichnung Folgendes:
Eine schematische Ansicht einer erfindungsgemässen Vorrichtung zeigt.
Beschreibung eines bevorzugten Ausführungsbeispiels.

Die Figur zeigt eine Flügeltür 1, die seitlich bewegbar gelagert ist. Diese Flügeltür 1 wird von drei Sensoren 2, 3, 4 überwacht. Diese Sensoren 2, 3, 4 senden die Signale 5, 6, 7 auf ein Objekt 8.

Dieses Objekt 8 wiederum strahlt Antwortsignale 5.1, 6.1, 7.1 an die entsprechenden Sensoren 2, 3, 4 zurück. Diese wiederum geben die erhaltenen Antwortsignale an einen Rechner 9 ab. Die Übertragung der Antwortsignale 5.1, 6.1, 7.1 von den Sensoren 2, 3, 4 an den Rechner 9 ist hier schematisch durch gestrichelte Linien offenbart. Der Rechner 9 entscheidet dann aufgrund der eingehenden Antwortsignale 5.1, 6.1, 7.1, ob das Objekt 8 statisch oder beweglich ist und ob das Objekt 8 bei Beweglichkeit durch die Flügeltür hindurch bewegt wird. Sollte aufgrund der eingehenden Antwortsignale 5.1, 6.1, 7.1 der Rechner 9 eine Bewegung des Objekts 8 hin zur Flügeltür 1 wahrnehmen, so gibt er der Flügeltür 1 den Befehl "öffnen". Diese Befehlsweitergabe ist in der Figur durch eine gepunktete Linie angedeutet. Sollte das Objekt 8 sich wieder von der Flügeltüre 1 fortbewegen, so werden entsprechende Antwortsignale 5.1, 6.1, 7.1 wieder über die Sensoren 2, 3, 4 an den Rechner 9 geleitet, wobei der Rechner 9 dann aufgrund der eingehenden Antwortsignale 5.1, 6.1, 7.1 entscheiden wird, die Flügeltür 1 wieder zu schliessen.

### Bezugszeichenliste

| | | | | | |
|---|---|---|---|---|---|
| 1 | Flügeltür | 34 | | 67 | |
| 2 | Sensor | 35 | | 68 | |
| 3 | Sensor | 36 | | 69 | |
| 4 | Sensor | 37 | | 70 | |
| 5 | Signal | 38 | | 71 | |
| 5.1 | Antwortsignal | | | | |
| 6 | Signal | 39 | | 72 | |
| 6.1 | Antwortsignal | | | | |
| 7 | Signal | 40 | | 73 | |
| 7.1 | Antwortsignal | | | | |
| 8 | Objekt | 41 | | 74 | |
| 9 | Rechner | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Überwachung und Ansteuerung einer Vorrichtung zum Öffnen und Verschliessen von Öffnungen (1) mit Sensoren (2, 3, 4), wobei die Sensoren (2, 3, 4) Signale (5, 6, 7) aussenden und Antwortsignale (5.1, 6.1, 7.1) empfangen,
**dadurch gekennzeichnet,**
**dass**
- die Antwortsignale (5.1, 6.1, 7.1) in einen zentralen Rechner (9) übermittelt werden,
- die eingehenden Antwortsignale (5.1, 6.1, 7.1) der Sensoren (2, 3, 4) im Rechner (9) ausgewertet werden,
- durch den Rechner (9) wird die Vorrichtung zum Verschliessen von Öffnungen (1) angesteuert.

2. Verfahren nach Anspruch 1, **dadurch gekennzeichnet, dass** aufgrund der eingehenden Antwortsignale (5.1, 6.1, 7.1) im Rechner (9) beweglich und unbewegliche Objekte (8) unterschieden werden.

3. Verfahren nach Anspruch 1 oder 2, **dadurch gekennzeichnet, dass** aufgrund der Antwortsignale (5.1, 6.1, 7.1) im Rechner (9) Objekte (8) und Personen unterschieden werden.

4. Verfahren nach einem der vorhergehenden Ansprüche, **dadurch gekennzeichnet, dass** im Rechner (9) die Antwortsignale (5.1, 6.1, 7.1) verschiedener Sensoren (2, 3, 4) kombiniert und ausgewertet werden.

5. Vorrichtung zur Durchführung eines Verfahrens nach einem der Ansprüche 1 bis 4, **dadurch gekennzeichnet, dass** mindestens zwei Sensoren (2, 3, 4) vorhanden sind, die zumindest eine Vorrichtung zum Öffnen und Verschliessen von Öffnungen (1) überwachen, **dadurch gekennzeichnet, dass** ein Rechner (9) die Vorrichtung zum Verschliessen von Öffnungen (1) ansteuert.

6. Vorrichtung nach Anspruch 5, **dadurch gekennzeichnet, dass** der Rechner (9) unabhängig von den Sensoren (2, 3, 4) vorhanden ist.

7. Vorrichtung nach Anspruch 5 oder 6, **dadurch gekennzeichnet, dass** die Sensoren (2, 3, 4) Signale (5, 6, 7) aussenden und Antwortsignale (5.1, 6.1, 7.1) empfangen.

8. Vorrichtung nach einem der vorhergehenden Ansprüche 5 bis 7, **dadurch gekennzeichnet, dass** die Übermittlung der Antwortsignale (5.1, 6.1, 7.1) von den Sensoren (2, 3, 4) einen Rechner (9) über Kabel oder Funk verläuft.

9. Vorrichtung nach einem der vorhergehenden Ansprüche 5 bis 8, **dadurch gekennzeichnet, dass** die Sensoren (2, 3, 4) Radarsensoren und/oder Ultraschallsensoren und/oder Infrarotsensoren und/oder CCD-Sensoren sind.

10. Vorrichtung nach einem der vorhergehenden Ansprüche 5 bis 9, **dadurch gekennzeichnet, dass** der Rechner (9) unabhängig von den Sensoren (2, 3, 4) anbringbar ist.
